# EUROPEAN PATENT APPLICATION

(11) **EP 4 693 866 A1**
(43) Date of publication of application: **11.02.2026**
(21) Application number: 24777810.3
(22) Date of filing: 20.03.2024
(51) Int. Cl.: H02M 3/158, H02M 3/335, H02J 7/00, H02J 3/38

(54) **CONTROL METHOD FOR PHOTOVOLTAIC ENERGY STORAGE DEVICE, AND PHOTOVOLTAIC ENERGY STORAGE SYSTEM AND PHOTOVOLTAIC POWER SUPPLY SYSTEM**

(30) Priority: 30.03.2023 CN 202310361502
(71) Applicant: EcoFlow Inc., Shenzhen, Guangdong 518000 (CN)
(72) Inventor: ZHAO, Mi, Shenzhen, Guangdong 518000 (CN); CHEN, Xi, Shenzhen, Guangdong 518000 (CN); WANG, Lei, Shenzhen, Guangdong 518000 (CN); TANG, Yang, Shenzhen, Guangdong 518000 (CN)
(74) Representative: Appelt, Christian W.
(86) International application number: PCT/CN2024/082554
(87) International publication number: WO 2024/199021

(57) **Abstract**

A control method for a photovoltaic energy storage device, including: when a photovoltaic panel supplies power to a load on an AC bus through a photovoltaic inverter, acquiring, at a first cycle, a first compensation power outputted from an AC power grid to the AC bus; acquiring a second compensation power outputted from a DC conversion circuit to the photovoltaic inverter; determining a target output power of the DC conversion circuit according to the first compensation power and the second compensation power; and controlling, within the first cycle, the DC conversion circuit to perform power compensation on the photovoltaic inverter at preset compensation cycles. An output power of the DC conversion circuit remains constant in each preset compensation cycle, and the output powers of adjacent two preset compensation cycles vary cycle by cycle, until the output power of the DC conversion circuit is within an allowable range of the target output power.

## Description

### CROSS-REFERENCE TO RELATED APPLICATIONS

This application claims priority to Chinese Patent Application No. 202310361502.6, entitled "CONTROL METHOD FOR PHOTOVOLTAIC ENERGY STORAGE DEVICE, PHOTOVOLTAIC ENERGY STORAGE SYSTEM, AND PHOTOVOLTAIC POWER SUPPLY SYSTEM" filed with the China National Intellectual Property Administration on March 30, 2023, which is incorporated by reference in its entirety.

### TECHNICAL FIELD

This application relates to the field of photovoltaic technology, and in particular to a control method for a photovoltaic energy storage device, a photovoltaic energy storage system, and a photovoltaic power supply system.

### BACKGROUND

In a photovoltaic energy storage system or photovoltaic power supply system, a photovoltaic panel can feed active power into an AC power grid through a photovoltaic inverter. When an electric energy generated by the photovoltaic panel cannot meet a load, the load must draw power from the AC power grid, resulting in additional commercial electricity costs for users. To address this issue, a DC conversion circuit and an energy storage circuit may be added for power compensation. The added DC conversion circuit needs to be coordinated with the photovoltaic inverter to maximize photovoltaic power generation through maximum power point tracking. Due to variations in control algorithms adopted by different models of photovoltaic inverters, the DC conversion circuit may establish a competitive relationship with the photovoltaic inverter, thus influencing the maximum power point tracking of the photovoltaic inverter and reducing the stability of the photovoltaic energy storage system or photovoltaic power supply system.

### SUMMARY

Various embodiments of this application provide a control method for a photovoltaic energy storage device, a photovoltaic energy storage system, a photovoltaic power supply system, and a storage medium.

According to a first aspect, this application provides a control method for a photovoltaic energy storage device, where the photovoltaic energy storage device includes an energy storage circuit and a DC conversion circuit; a first end of the DC conversion circuit is configured to be respectively connected to a photovoltaic panel and a photovoltaic inverter; a second end of the DC conversion circuit is connected to the energy storage circuit; the photovoltaic energy storage device is configured to output electric energy to the photovoltaic inverter, and supply power to a load connected to an AC bus after undergoing AC-DC conversion by the photovoltaic inverter; the AC bus is further connected to an AC power grid, and the method includes: when the photovoltaic panel supplies power to the load on the AC bus through the photovoltaic inverter, acquiring, at a first cycle, a first compensation power outputted from the AC power grid to the AC bus; acquiring a second compensation power outputted from the DC conversion circuit to the photovoltaic inverter; determining a target output power of the DC conversion circuit according to the first compensation power and the second compensation power; and controlling, within the first cycle, the DC conversion circuit to perform power compensation on the photovoltaic inverter at preset compensation cycles, where an output power of the DC conversion circuit remains constant in each preset compensation cycle, and the output powers of adjacent two preset compensation cycles vary cycle by cycle, until the output power of the DC conversion circuit is within an allowable range of the target output power; and a duration of the preset compensation cycle is greater than a duration for the photovoltaic inverter to perform maximum power tracking.

According to a second aspect, this application further provides a photovoltaic energy storage system, including an energy storage circuit, a DC conversion circuit, and a controller, where the controller is configured to implement the control method for a photovoltaic energy storage device described above.

According to a third aspect, this application further provides a photovoltaic power supply system, including a photovoltaic panel, a photovoltaic inverter, and a photovoltaic energy storage device, where the photovoltaic energy storage device includes an energy storage circuit, a DC conversion circuit, and a controller, the controller being configured to implement the control method for a photovoltaic energy storage device described above.

According to fourth aspect, this application further provides a computer-readable storage medium, storing a computer program, where the computer program is executed by a processor to implement the control method for a photovoltaic energy storage device described above.

Details of one or more embodiments of this application will be presented in the following drawings and descriptions. Other features, purposes and advantages of this application will become apparent from the description, drawings and claims.

### BRIEF DESCRIPTION OF THE DRAWINGS

To describe the technical solutions of the embodiments of this application more clearly, the following briefly introduces the drawings required for describing the embodiments. Apparently, the drawings in the following description show some embodiments of this application, and an ordinary person skilled in the art may obtain other drawings according to these drawings without contributing any inventive labor.
FIG. 1 is a schematic structural diagram of a photovoltaic power supply system according to an embodiment of this application.
FIG. 2 is a schematic structural diagram of a photovoltaic energy storage system according to an embodiment of this application.
FIG. 3 is a schematic flowchart of a control method for a photovoltaic energy storage device according to an embodiment of this application.
FIG. 4 is a power-voltage curve diagram of a photovoltaic panel according to an embodiment of this application.
FIG. 5 is a schematic flowchart of sub-steps of performing power compensation according to an embodiment of this application.
FIG. 6 is a schematic diagram of a DC conversion circuit according to an embodiment of this application.
FIG. 7 is a schematic flowchart of sub-steps of calculating a first duty cycle according to an embodiment of this application.
FIG. 8 is a schematic diagram of a first discharging control loop according to an embodiment of this application.
FIG. 9 is a schematic diagram of a second discharging control loop according to an embodiment of this application.
FIG. 10 is a schematic flowchart of another control method for a photovoltaic energy storage device according to an embodiment of this application.
FIG. 11 is a power-voltage curve diagram of another photovoltaic panel according to an embodiment of this application.
FIG. 12 is a schematic flowchart of sub-steps of calculating a second duty cycle according to an embodiment of this application.
FIG. 13 is a schematic diagram of a charging control loop according to an embodiment of this application.

### DETAILED DESCRIPTION

The technical solutions in the embodiments of this application will be clearly and completely described below in conjunction with the drawings in the embodiments of this application. Obviously, the described embodiments are merely some rather than all of the embodiments of this application. All other examples obtained by an ordinary person skilled in the art based on the examples of this application without contributing any inventive labor shall still fall within the scope of protection of this application.

The flowcharts shown in the drawings are only for exemplary description, and do not necessarily include all the content and operations/steps, nor do they have to be executed in the order described. For example, some operations/steps may also be decomposed, combined, or partially merged, so the actual execution order may vary according to the actual situation.

It should be understood that the terms used in the description of this application are only for the purpose of describing specific embodiments and are not intended to limit this application. As used in the description and accompanying claims of this application, unless the context clearly indicates otherwise, the singular forms of "a", "one", and "the" are intended to include the plural form.

It should also be understood that the term "and/or" used in the description and accompanying claims of this application refers to any combination of one or more of the listed items and all possible combinations, including these combinations.

Embodiments of this application provide a control method for a photovoltaic energy storage device, a photovoltaic energy storage system, a photovoltaic power supply system, and a computer-readable storage medium. The control method may be configured in the photovoltaic energy storage device for controlling a DC conversion circuit to perform power compensation on a photovoltaic inverter at preset compensation cycles when a load takes power from an AC power grid, so that a compensation power of the AC power grid can be decreased to zero, and at the same time, an output power of the DC conversion circuit can slowly change relative to a maximum power tracked by the photovoltaic inverter without changing a position of a maximum power tracking point, thus not affecting a maximum power tracking performed by the photovoltaic inverter, and improving the stability of the photovoltaic energy storage system and the photovoltaic power supply system.

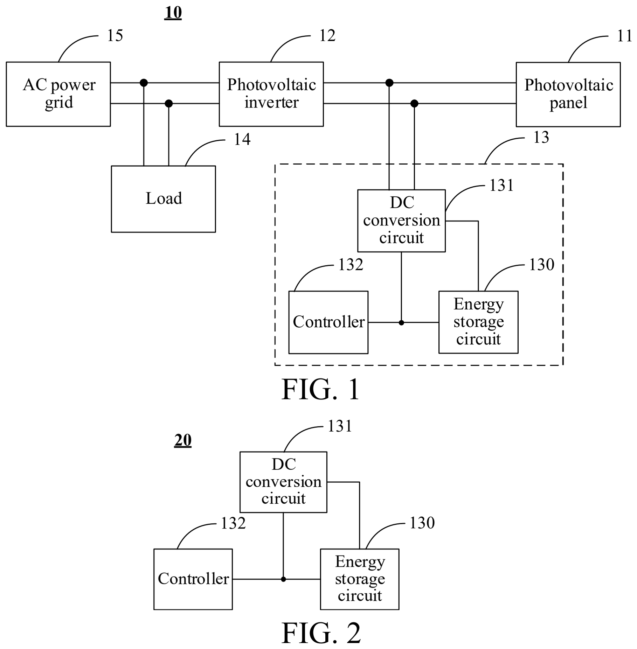

Please refer to FIG. 1. FIG. 1 is a schematic structural diagram of a photovoltaic power supply system 10 according to an embodiment of this application. As shown in FIG. 1, the photovoltaic power supply system 10 includes a photovoltaic panel 11, a photovoltaic inverter 12, and a photovoltaic energy storage device 13. The photovoltaic panel 11 is connected to the photovoltaic inverter 12. The photovoltaic energy storage device 13 is connected to the photovoltaic panel 11 and the photovoltaic inverter 12 respectively. For example, the photovoltaic panel 11 may be connected to the photovoltaic inverter 12 through a DC bus, and the photovoltaic energy storage device 13 may be connected to the photovoltaic panel 11 and the photovoltaic inverter 12 respectively through a DC bus.

It should be noted that the photovoltaic panel 11 is configured to convert solar energy into electric energy and output the electric energy to the photovoltaic inverter 12 and/or the photovoltaic energy storage device 13, and the photovoltaic inverter 12 is configured to convert a direct current outputted by the photovoltaic panel 11 into an alternating current.

Exemplarily, the photovoltaic energy storage device 13 may be a mobile energy storage device, a household energy storage device, or an energy storage device mounted on a vehicle.

As shown in FIG. 1, the photovoltaic energy storage device 13 is configured to output electric energy to the photovoltaic inverter 12, and supply power to a load 14 connected to an AC bus after undergoing AC-DC conversion by the photovoltaic inverter 12, and the AC bus is further connected to an AC power grid 15. The load 14 may be a power consuming device. It should be noted that the electric energy outputted by the photovoltaic energy storage device 13 may be electric energy provided by the photovoltaic panel 11 (that is, the electric energy outputted by the photovoltaic panel 11 is outputted to the load 14 for power supply through a bypass or power conversion circuit in the photovoltaic energy storage device 13), or electric energy provided by a battery in the photovoltaic energy storage device 13.

As shown in FIG. 1, the photovoltaic energy storage device 13 may include an energy storage circuit 130, a DC conversion circuit 131, and a controller 132. A first end of the DC conversion circuit 131 is configured to be connected to the photovoltaic panel 11 and the photovoltaic inverter 12 respectively, and a second end of the DC conversion circuit 131 is connected to the energy storage circuit 130.

Exemplarily, the energy storage circuit 130 may include a battery, which is configured to store electric energy when the photovoltaic panel 11 outputs electric energy, and configured to output electric energy to the photovoltaic inverter 12 when the photovoltaic panel 11 does not output electric energy. The DC conversion circuit 131 may include a DC/DC (Direct Current to Direct Current) conversion unit, which is configured to perform voltage conversion on the electric energy outputted by the photovoltaic panel 11, and configured to perform voltage conversion on the electric energy outputted by the energy storage circuit 130.

The controller 132 may be connected to the energy storage circuit 130 and the DC conversion circuit 131 through a bus. The bus may be any suitable communication bus such as I²C (Inter integrated Circuit) bus. The controller 132 is configured to provide computing and control capabilities to support the operation of the entire photovoltaic energy storage device 13.

The controller 132 may be a central processing unit (CPU). The processor may also be another general-purpose processor, digital signal processor (DSP), application specific integrated circuit (ASIC), field programmable gate array (FPGA), or another programmable logic device, a discrete gate or a transistor logic device, a discrete hardware component, or the like. The general-purpose processor may be a microprocessor or the processor may be any conventional processor.

Please refer to FIG. 2. FIG. 2 is a schematic structural diagram of a photovoltaic energy storage system 20 according to an embodiment of this application. As shown in FIG. 2, the photovoltaic energy storage system 20 may include an energy storage circuit 130, a DC conversion circuit 131, and a controller 132.

Exemplarily, the energy storage circuit 130 may include a battery, which is configured to store electric energy generated by a power generation device and configured to output electric energy to a load. The power generation device may be a photovoltaic panel, and the load may be a power consuming device.

Exemplarily, the DC conversion circuit 131 may include a DC/DC conversion unit, which is configured to perform voltage conversion on the electric energy outputted by the power generation device, and configured to perform voltage conversion on the electric energy outputted by the energy storage circuit 130.

In this embodiment of this application, the DC/DC conversion unit may include a boost circuit and a DAB (Dual Active Bridge) circuit, or may include a boost circuit and an LLC series parallel resonance circuit. The specific circuit structures of the boost circuit, the DAB circuit, and the LLC circuit are not limited here.

In this embodiment of this application, the controller 132 in FIG. 1 and FIG. 2 can implement the following steps when executing relevant computer programs:
when a photovoltaic panel supplies power to a load on an AC bus through a photovoltaic inverter, acquiring, at a first cycle, a first compensation power outputted from an AC power grid to the AC bus; acquiring a second compensation power outputted from a DC conversion circuit to the photovoltaic inverter; determining a target output power of the DC conversion circuit according to the first compensation power and the second compensation power; and controlling, within the first cycle, the DC conversion circuit to perform power compensation on the photovoltaic inverter at preset compensation cycles, where an output power of the DC conversion circuit remains constant in each preset compensation cycle, and the output powers of adjacent two preset compensation cycles vary cycle by cycle, until the output power of the DC conversion circuit is within an allowable range of the target output power; and a duration of the preset compensation cycle is greater than a duration for the photovoltaic inverter to perform maximum power tracking.

In an embodiment, the DC conversion circuit includes a DC/DC conversion unit; the DC/DC conversion unit includes an inductor and at least one bridge arm unit; the bridge arm unit includes two switching transistors connected in series; and the controller 132 is further configured to implement:
within each preset compensation cycle, acquiring a discharging voltage sampling value, a discharging current sampling value, and an inductor current sampling value of the DC conversion circuit; determining an output power reference value of a current compensation cycle according to the second compensation power and an absolute value of a power variation between adjacent two preset compensation cycles; calculating a first duty cycle according to the output power reference value, the discharging voltage sampling value, the discharging current sampling value, and the inductor current sampling value; and generating a first driving signal to the DC/DC conversion unit according to the first duty cycle.

In an embodiment, when implementing determining an output power reference value of a current compensation cycle according to the second compensation power and an absolute value of a power variation between the output powers of adjacent two preset compensation cycles, the controller 132 is configured to implement:
if the target output power is greater than the second compensation power, increasing an output power reference value of a previous compensation cycle by the absolute value of the power variation to obtain the output power reference value of the current compensation cycle; and if the target output power is less than the second compensation power, decreasing the output power reference value of the previous compensation cycle by the absolute value of the power variation to obtain the output power reference value of the current compensation cycle.

In an embodiment, when implementing calculating a first duty cycle according to the output power reference value, the discharging voltage sampling value, the discharging current sampling value, and the inductor current sampling value, the controller 132 is configured to implement:
calculating an output power sampling value of the DC conversion circuit according to the discharging voltage sampling value and the discharging current sampling value; performing deviation regulation according to a power difference between the output power reference value and the output power sampling value, and then performing amplitude limiting processing to obtain a first inductor current reference value; and performing deviation regulation according to a current difference between the first inductor current reference value and the inductor current sampling value to obtain the first duty cycle.

In an embodiment, when implementing acquiring a second compensation power outputted from the DC conversion circuit to the photovoltaic inverter, the controller 132 is configured to implement:
determining the second compensation power according to an output current and output voltage of the DC conversion circuit.

In an embodiment, the controller 132 is further configured to implement:
when the photovoltaic panel supplies power to the load through the photovoltaic inverter, acquiring, at a second cycle, a power supply power of the photovoltaic panel; acquiring a load demand power of the load; determining a target charging power of the DC conversion circuit according to the power supply power and the load demand power; and controlling, within the second cycle, the DC conversion circuit to perform charging on the energy storage circuit at preset charging cycles, where a charging power of the DC conversion circuit remains constant in each preset charging cycle, and the charging powers of adjacent two preset charging cycles vary cycle by cycle, until the charging power of the DC conversion circuit is within an allowable range of the target charging power; and a duration of the preset charging cycle is greater than a duration for the photovoltaic inverter to perform maximum power tracking.

In an embodiment, the DC conversion circuit includes a DC/DC conversion unit; the DC/DC conversion unit includes an inductor and at least one bridge arm unit; and when implementing controlling, within the second cycle, the DC conversion circuit to perform charging on the energy storage circuit at preset charging cycles, the controller 132 is configured to implement:
acquiring a charging voltage given value, a charging voltage sampling value, a charging current sampling value of the DC conversion circuit, and an inductor current sampling value of the DC conversion circuit; determining a charging power reference value of a current charging cycle according to the target charging power and an absolute value of a power variation between adjacent two preset charging cycles; calculating a second duty cycle according to the charging power reference value, the charging voltage given value, the charging voltage sampling value, the charging current sampling value, and the inductor current sampling value; and generating a second driving signal to the DC/DC conversion unit according to the second duty cycle.

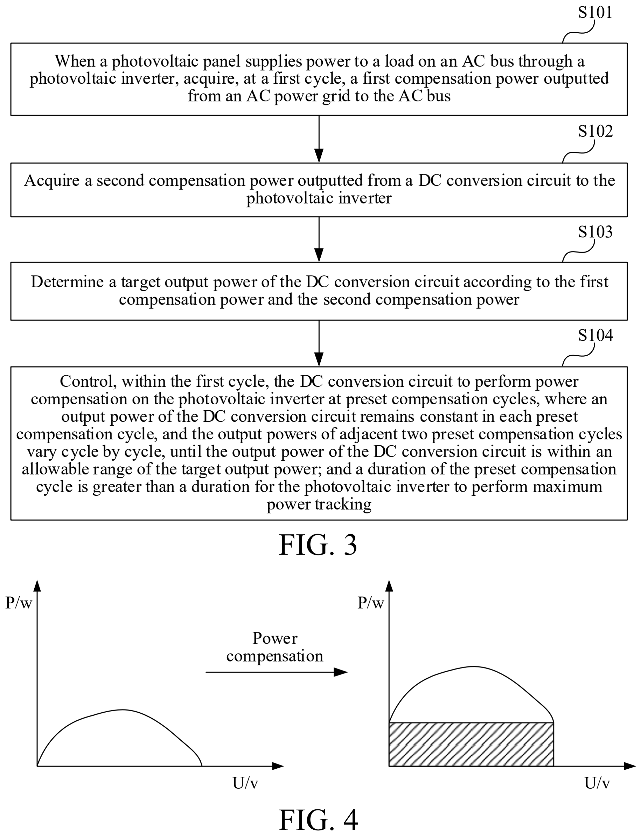

The following describes some embodiments of this application in detail in conjunction with the accompanying drawings. Without causing any conflict, the following embodiments and the features in the embodiments may be combined with each other. Please refer to FIG. 3. FIG. 3 is a schematic flowchart of a control method for a photovoltaic energy storage device according to an embodiment of this application. As shown in FIG. 3, the control method for a photovoltaic energy storage device includes step S101 to step S104.

In step S101, when a photovoltaic panel supplies power to a load on an AC bus through a photovoltaic inverter, a first compensation power outputted from an AC power grid to the AC bus is acquired at a first cycle.

In some embodiments, when a photovoltaic panel supplies power to a load on an AC bus through a photovoltaic inverter, a first compensation power outputted from an AC power grid to the AC bus is acquired at a first cycle.

It should be noted that the control method for a photovoltaic energy storage device in this embodiment of this application should be configured such that in a scenario where the photovoltaic panel supplies power to the load through the photovoltaic inverter, when the power supply power outputted by the photovoltaic panel is insufficient, the photovoltaic energy storage device can perform power compensation on the photovoltaic inverter.

It can be understood that the power outputted by the photovoltaic panel being insufficient refers to the power outputted by the photovoltaic panel being less than the load demand power of the load. In this case, the AC power grid outputs the first compensation power to the load. Power compensation refers to the DC conversion circuit outputting a power to the photovoltaic inverter, so that the first compensation power of the AC power grid is decreased to zero.

Exemplarily, a bus voltage and bus current outputted from the AC power grid to the AC bus may be acquired at the first cycle, and the first compensation power is determined according to the bus voltage and bus current. The first cycle may be set according to an actual situation, and its specific value is not limited here. The bus voltage may be a mains voltage, such as 220 V. For example, the bus current outputted from the AC power grid to the AC bus may be acquired every 10 s through a current acquisition circuit, and the first compensation power is calculated according to the bus current and the mains voltage.

In the above embodiment, by acquiring the first compensation power outputted from the AC power grid to the AC bus, the DC conversion circuit may be controlled based on the first compensation power to perform power compensation on the photovoltaic inverter, so that the first compensation power is decreased to zero, thus reducing the electricity cost.

In step S102, a second compensation power outputted from a DC conversion circuit to the photovoltaic inverter is acquired.

In this embodiment of this application, a second compensation power outputted from the DC conversion circuit to the photovoltaic inverter may be acquired. The second compensation power refers to a power outputted from the DC conversion circuit to the photovoltaic inverter in a case that the power supply power of the photovoltaic panel does not meet the load demand power of the load.

In some embodiments, acquiring a second compensation power outputted from the DC conversion circuit to the photovoltaic inverter may include determining the second compensation power according to an output current and output voltage of the DC conversion circuit.

Exemplarily, the output voltage of the DC conversion circuit may be acquired through a voltage sampling circuit, the output current of the DC conversion circuit may be acquired through a current sampling circuit, and the second compensation power is calculated according to a product of the output voltage and the output current.

In the above embodiment, by acquiring the second compensation power outputted from the DC conversion circuit, the second compensation power may be added to the first compensation power as a target output power of the DC conversion circuit.

In step S103, a target output power of the DC conversion circuit is determined according to the first compensation power and the second compensation power.

Exemplarily, a sum of the first compensation power and the second compensation power may be determined as the target output power of the DC conversion circuit.

For example, when the load demand power of the load is 500 W and both the photovoltaic panel and the DC conversion circuit output power simultaneously, if the first compensation power outputted from the AC power grid to the AC bus is 300 W and the second compensation power of the DC conversion circuit is 100 W, in order to decrease the first compensation power outputted from the AC power grid to 0 during power compensation, the target output power of the DC conversion circuit may be determined to be 300 W+100 W.

In step S104, the DC conversion circuit is controlled within the first cycle to perform power compensation on the photovoltaic inverter at preset compensation cycles, where an output power of the DC conversion circuit remains constant in each preset compensation cycle, and the output powers of adjacent two preset compensation cycles vary cycle by cycle, until the output power of the DC conversion circuit is within an allowable range of the target output power; and a duration of the preset compensation cycle is greater than a duration for the photovoltaic inverter to perform maximum power tracking.

Exemplarily, after determining the target output power of the DC conversion circuit, the DC conversion circuit may be controlled within the first cycle to perform power compensation on the photovoltaic inverter at preset compensation cycles.

In some embodiments, when performing power compensation, an output power of the DC conversion circuit remains constant in each preset compensation cycle, and the output powers of adjacent two preset compensation cycles vary cycle by cycle, until the output power of the DC conversion circuit is within an allowable range of the target output power. The absolute value of the power variation between adjacent two preset compensation cycles is a preset value. The preset value may be set according to an actual situation, and its specific value is not limited here.

Exemplarily, when the preset value is 50 W, if an output power of the first preset compensation cycle is 200 W, an output power of the second preset compensation cycle is 250 W, an output power of the third preset compensation cycle is 300 W, and so on, until the output power of the DC conversion circuit reaches the target output power. For example, if the target output power is 500 W, when the output power of the DC conversion circuit reaches the target output power of 500 W, the output power of the DC conversion circuit remains stable and no longer varies cycle by cycle. Reaching the target output power may refer to the actual output power being equal to the target output power, or within the allowable range of the target output power. The allowable range may be set according to an actual situation, and its specific value is not limited here. For example, if the allowable range is (-5 W, 5 W), the output power of the DC conversion circuit may be maintained between 495 W and 505 W.

In some other embodiments, when performing power compensation, an output power of the DC conversion circuit remains constant in each preset compensation cycle, and the output powers of adjacent two preset compensation cycles vary cycle by cycle, until the output power of the DC conversion circuit is within an allowable range of the target output power. The absolute value of the power variation between adjacent two preset compensation cycles is determined according to a difference between the target output power and the second compensation power.

Exemplarily, if the target output power is 500 W and the second compensation power is 200 W, a difference between the target output power and the second compensation power is 300 W. The absolute value of the power conversion between adjacent two preset compensation cycles may be determined according to the difference of 300 W. For example, the absolute value of the power conversion may be 100 W. When an output power of the first preset compensation cycle is 200 W, an output power of the second preset compensation cycle is 300 W, an output power of the third preset compensation cycle is 400 W, and so on, until the output power of the DC conversion circuit is within the allowable range of the target output power.

Please refer to FIG. 4. FIG. 4 is a power-voltage curve diagram of a photovoltaic panel according to an embodiment of this application. As shown in FIG. 4, a shaded area represents the compensation power, i.e., the first compensation power described above. When the output power of the DC conversion circuit remains constant, it is equivalent to increasing by a power value on the premise of the original power supply power of the photovoltaic panel. A PV curve of the photovoltaic panel shifts upwards relative to the original one, and a shape of the PV curve does not vary. Therefore, power compensation will not change the position of the maximum power tracking point, and will not affect the maximum power tracking of the photovoltaic inverter.

In the above embodiment, by setting the output power of the DC conversion circuit to remain constant in each preset compensation cycle and the output powers of adjacent two preset compensation cycles to vary cycle by cycle, the output power of the DC conversion circuit can slowly vary relative to the maximum power tracked by the photovoltaic inverter, thus not affecting the maximum power tracking of the photovoltaic inverter, and improving the stability of the photovoltaic energy storage system and the photovoltaic power supply system.

In this embodiment of this application, the duration of the preset compensation cycle is greater than the duration for the photovoltaic inverter to perform maximum power tracking. For example, the duration of the preset compensation cycle is N times the duration of maximum power tracking, where N is greater than or equal to 1.

It should be noted that by setting the duration of the preset compensation cycle to be greater than the duration for the photovoltaic inverter to perform maximum power tracking, the output power of the DC conversion circuit will not change the position of the maximum power tracking point, thus not affecting the maximum power tracking of the photovoltaic inverter, and improving the stability of the system.

In some embodiments, the output powers of adjacent two preset compensation cycles varying cycle by cycle includes: when the target output power is greater than the second compensation power, the output powers of adjacent two preset compensation cycles increasing cycle by cycle; and when the target output power is less than the second compensation power, the output powers of adjacent preset compensation cycles decreasing cycle by cycle.

Exemplarily, when the target output power is 500 W and the second compensation power is 200 W, the output power of the DC conversion circuit in adjacent two preset compensation cycles may be controlled to increase cycle by cycle, until the output power of the DC conversion circuit is within the allowable range of the target output power. For example, when the output power of the first preset compensation cycle is 200 W, the output power of the second preset compensation cycle is 250 W, the output power of the third preset compensation cycle is 300 W, and so on.

Exemplarily, when the target output power is 200 W and the second compensation power is 500 W, the output power of the DC conversion circuit in adjacent two preset compensation cycles may be controlled to decrease cycle by cycle until the output power of the DC conversion circuit is within the allowable range of the target output power. For example, when the output power of the first preset compensation cycle is 500 W, the output power of the second preset compensation cycle is 450 W, the output power of the third preset compensation cycle is 400 W, and so on.

It should be noted that when the first compensation power output from the AC power grid to the AC bus is a negative value, the target output power is less than the second compensation power.

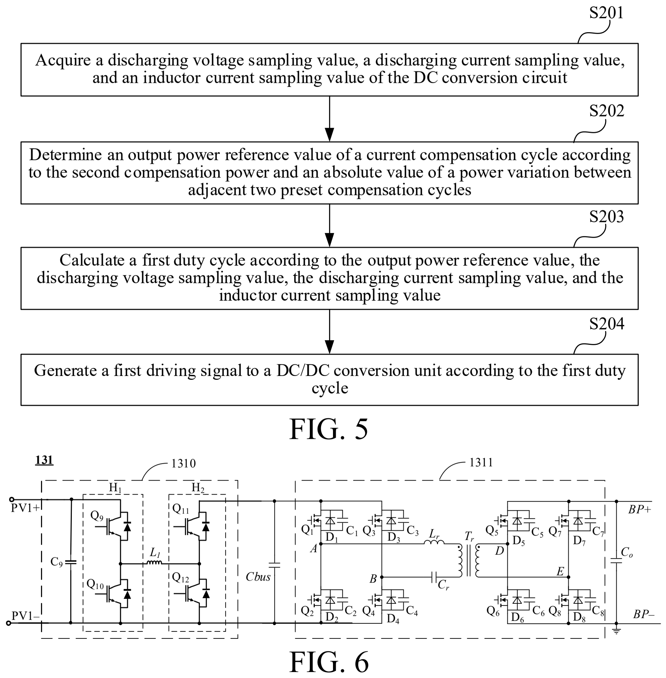

In this embodiment of this application, how to control the DC conversion circuit to perform power compensation on the photovoltaic inverter will be described in detail. Please refer to FIG. 5. FIG. 5 is a schematic flowchart of sub-steps of performing power compensation according to an embodiment of this application. Step S104, i.e., controlling the DC conversion circuit to perform power compensation on the photovoltaic inverter at preset compensation cycles, may include the following step S201 to step S204.

In step S201, a discharging voltage sampling value, a discharging current sampling value, and an inductor current sampling value of the DC conversion circuit are acquired.

In this embodiment of this application, the DC conversion circuit may include a DC/DC conversion unit, the DC/DC conversion unit includes an inductor and at least one bridge arm unit, and the bridge arm unit includes two switching transistors connected in series. It should be noted that when the DC/DC conversion unit includes a boost circuit and an LLC circuit, the inductor may be an inductor in the LLC circuit, and the bridge arm unit may be a bridge arm unit in the boost circuit.

Please refer to FIG. 6. FIG. 6 is a schematic diagram of a DC conversion circuit. As shown in FIG. 6, the DC conversion circuit 131 may include a boost circuit 1310 and a DAB circuit 1311, where an input end of the boost circuit 1310 is connected to a PV1+ end and a PV1- end of a photovoltaic panel 11 (not shown in the figure), an output end of the boost circuit 1310 is connected to an input end of the DAB circuit 1311, and an output end of the DAB circuit 1311 is connected to a BP+t end and a BP- end of an energy storage circuit 130 (not shown in the figure). The boost circuit 1310 may include a first bridge arm unit H₁ and a second bridge arm unit H₂, and the DAB circuit 1311 may include an inductor Lr.

Exemplarily, voltage acquisition may be performed on an output side of the DC conversion circuit through a voltage acquisition circuit to obtain the discharging voltage sampling value of the DC conversion circuit; and current acquisition may be performed on the output side of the DC conversion circuit through a current acquisition circuit to obtain the discharging current sampling value of the DC conversion circuit. Besides, current acquisition may be performed on the inductor unit of the DC conversion circuit through a current acquisition circuit to obtain the inductor current sampling value of the DC conversion circuit.

In step S202, an output power reference value of a current compensation cycle is determined according to a second compensation power and an absolute value of a power variation between adjacent two preset compensation cycles.

It should be noted that the output power reference value of the current compensation cycle refers to the power that the DC conversion circuit needs to output in the current compensation cycle.

In some embodiments, determining an output power reference value of a current compensation cycle according to the second compensation power and an absolute value of a power variation between the output powers of adjacent two preset compensation cycles may include: if the target output power is greater than the second compensation power, increasing an output power reference value of a previous compensation cycle by the absolute value of the power variation to obtain the output power reference value of the current compensation cycle.

Exemplarily, if the target output power is 500 W, the second compensation power is 200 W, the absolute value of the power variation is 50 W, and the output power reference value of the previous compensation cycle is 250 W, then the output power reference value of the current compensation cycle may be determined to be 300 W.

In some other embodiments, determining an output power reference value of a current compensation cycle according to the second compensation power and an absolute value of a power variation between the output powers of adjacent two preset compensation cycles may include: if the target output power is less than the second compensation power, decreasing the output power reference value of the previous compensation cycle by the absolute value of the power variation to obtain the output power reference value of the current compensation cycle.

Exemplarily, if the target output power is 200 W, the second compensation power is 500 W, the absolute value of the power variation is 100 W, and the output power reference value of the previous compensation cycle is 400 W, then the output power reference value of the current compensation cycle may be determined to be 300 W.

In the above embodiment, by determining the output power reference value, the DC conversion circuit can be controlled to output the corresponding power according to the output power reference value.

In step S203, a first duty cycle is calculated according to the output power reference value, the discharging voltage sampling value, the discharging current sampling value, and the inductor current sampling value.

Exemplarily, after acquiring the output power reference value of the current compensation cycle, the output power reference value, the discharging voltage sampling value, the discharging current sampling value, and the inductor current sampling value may be inputted into a preset first discharging control loop to perform duty cycle calculation to obtain the first duty cycle.

It should be noted that in this embodiment of this application, the preset first discharging control loop is configured to control the output power of the DC conversion circuit. The first discharging control loop is configured to output a duty cycle to control the on/off of the switching transistor in the DC conversion circuit, so as to achieve the regulation of the output power of the DC conversion circuit.

In step S204, a first driving signal to a DC/DC conversion unit is generated according to the first duty cycle.

Exemplarily, after calculating the first duty cycle, a first driving signal to the DC/DC conversion unit may be generated according to the first duty cycle. The first driving signal may be a PWM (Pulse Width Modulation) signal.

For example, a PWM signal is generated according to the first duty cycle and outputted to the switching transistor in the DC/DC conversion unit, so that the switching transistor can be turned on or off according to the first duty cycle.

In the above embodiment, by outputting the first driving signal to the DC/DC conversion unit in the DC conversion circuit, the DC/DC conversion unit can operate according to the first driving signal and output a power that matches the output power reference value.

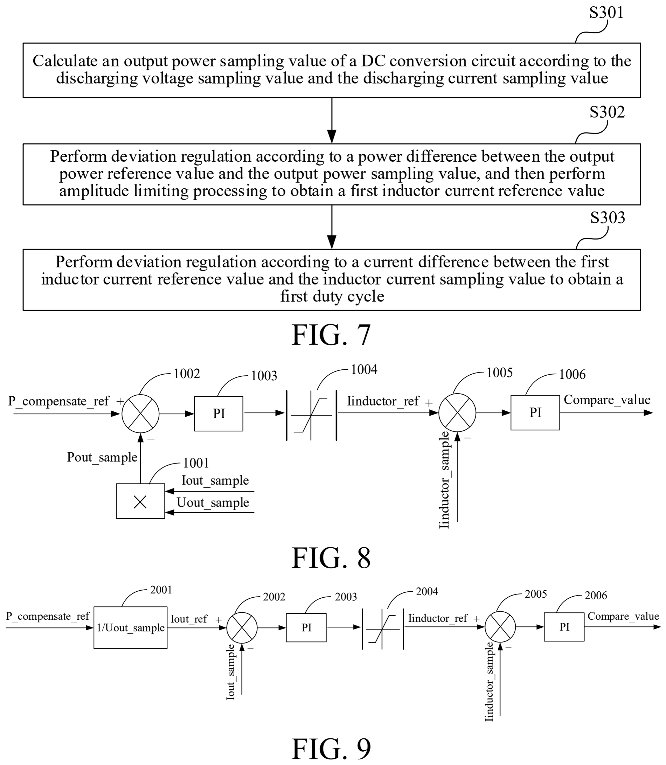

Please refer to FIG. 7. FIG. 7 is a schematic flowchart of sub-steps of calculating a first duty cycle according to an embodiment of this application. Step S203, i.e., generating a first driving signal, may include the following step S301 to step S303.

In S301, an output power sampling value of a DC conversion circuit is calculated according to the discharging voltage sampling value and the discharging current sampling value.

Please refer to FIG. 8. FIG. 8 is a schematic diagram of a first discharging control loop according to an embodiment of this application. As shown in FIG. 8, the first discharging control loop is a loop composed of a power loop and an inductor current inner loop. The first discharging control loop may include a multiplier 1001, a first adder 1002, a first deviator 1003, a first amplitude limiter 1004, a second adder 1005, and a second deviator 1006. P_compensate_ref represents the output power reference value, Uout_stample represents the discharging voltage sampling value, Iout_stample represents the discharging current sampling value, and Iinduuctor_stample represents the inductor current sampling value.

It should be noted that the first deviator 1003 and the second deviator 1006 may be PI (Proportional Integral) regulators, which are configured to quickly regulate the deviation of current and can eliminate residual errors. The first amplitude limiter 1004 is configured to perform amplitude limitation on the magnitude of current.

In some embodiments, based on the multiplier, an output power sampling value of the DC conversion circuit is calculated according to the discharging voltage sampling value and the discharging current sampling value.

Exemplarily, as shown in FIG. 8, the discharging voltage sampling value Uout_stample and the discharging current sampling value Iout_stample may be inputted into the multiplier 1001 for multiplication to obtain the output power sampling value Pout_sample of the DC conversion circuit.

In S302, deviation regulation is performed according to a power difference between the output power reference value and the output power sampling value, and then amplitude limiting processing is performed to obtain a first inductor current reference value.

In some embodiments, based on the first adder, subtraction is performed on the output power reference value and the output power sampling value to obtain a power difference; and based on the first deviator and the first amplitude limiter, deviation regulation is performed on the power difference and then amplitude limiting processing is performed to obtain a first inductor current reference value.

Exemplarily, as shown in FIG. 8, the output power reference value P_compensate_ref and the output power sampling value Pout_sample are inputted into the first adder 1002 to perform subtraction to obtain a power difference, and then the obtained power difference undergoes deviation regulation through the first deviator 1003 and then inputted into the first amplitude limiter 1004 to perform amplitude limiting processing to obtain a first inductor current reference value Iinductor_ref.

In S303, deviation regulation is performed according to a current difference between the first inductor current reference value and the inductor current sampling value to obtain the first duty cycle.

In some embodiments, based on the second adder, subtraction is performed on the first inductor current reference value and the inductor current sampling value to obtain a current difference; and based on the second deviator, deviation regulation is performed on the current difference to obtain the first duty cycle.

Exemplarily, as shown in FIG. 8, the first inductor current reference value Iinduuctor_ref and the inductor current sampling value Iinduuctor_stample may be inputted into the second adder 1005 to perform subtraction to obtain a current difference; and the current difference is inputted into the second deviator 1006 to perform deviation regulation to obtain the first duty cycle Compare_value.

For example, the current value obtained by deviation regulation through the second deviator 1006 may be used as a pulse duration in the first duty cycle. It should be noted that the duty cycle refers to the ratio of the pulse duration to the regulation cycle within a modulation cycle.

In the above embodiment, the first duty cycle is obtained by inputting the output power reference value, the discharging voltage sampling value, the discharging current sampling value, and the inductor current sampling value into the first discharging control loop to perform duty cycle calculation. This may quickly and accurately determine the first duty cycle.

In some other embodiments, step S203, i.e., calculating a first duty cycle according to the output power reference value, the discharging voltage sampling value, the discharging current sampling value, and the inductor current sampling value, may further include: calculating a discharging current reference value of the DC conversion circuit according to the output power reference value and the discharging voltage sampling value; performing deviation regulation according to a current difference between the discharging current reference value and the discharging current sampling value, and then performing amplitude limiting processing to obtain a second inductor current reference value; and performing deviation regulation according to a current difference between the second inductor current reference value and the inductor current sampling value to obtain the first duty cycle.

It should be noted that in this embodiment of this application, in addition to adopting the first discharging control loop composed of the power loop and the inductor current inner loop to calculate the first duty cycle, a second discharging control loop composed of a constantpower current loop may also be adopted to calculate the first duty cycle.

Please refer to FIG. 9. FIG. 9 is a schematic diagram of a second discharging control loop according to an embodiment of this application. As shown in FIG. 9, the second discharging control loop may include a first divider 2001, a third adder 2002, a third deviator 2003, a second amplitude limiter 2004, a fourth adder 2005, and a fourth deviator 2006. P_compensate_ref represents the output power reference value, Uout_stample represents the discharging voltage sampling value, Iout_stample represents the discharging current sampling value, and Iinduuctor_stample represents the inductor current sampling value.

It should be noted that the third deviator 2003 and the fourth deviator 2006 may be PI regulators, which are configured to quickly regulate the deviation of current and can eliminate residual errors. The second amplitude limiter 2004 is configured to perform amplitude limitation on the magnitude of current.

Exemplarily, as shown in FIG. 9, firstly, the output power reference value P_compensate_ref and the discharging voltage sampling value Uout_stample may be inputted into the first divider 2001 to perform division to obtain a discharging current reference value Iout_ref of the DC conversion circuit. Secondly, the discharging current reference value Iout_ref and the discharging current sampling value Iout_stample are inputted into the third adder 2002 to perform subtraction to obtain a current difference, and then the obtained current difference undergoes deviation regulation through the third deviator 2003 and then inputted into the second amplitude limiter 2004 to perform amplitude limiting processing to obtain a second inductor current reference value Iinductor_ref. Finally, the second inductor current reference value Iinduuctor_ref and the inductor current sampling value Iinduuctor_stample are inputted into the fourth adder 2005 to perform subtraction, and the obtained current value is inputted into the fourth deviator 2006 to perform deviation regulation to obtain the first duty cycle Compare_value.

In the above embodiment, by inputting the output power reference value, the discharging voltage sampling value, the discharging current sampling value, and the inductor current sampling value into the second discharging control loop to perform duty cycle calculation, it can avoid the problem of large power fluctuation caused by adopting the output power sampling value for calculation when the discharging current sampling value is large, reduce unnecessary fluctuation, and improve the calculation accuracy of the first duty cycle.

In this embodiment of this application, in addition to performing power compensation on the photovoltaic inverter when the AC power grid outputs power to the AC bus, power extraction may be performed on the excess power in a case that the power supply power of the photovoltaic panel meets the load and there is surplus power. The power extraction refers to charging an energy storage circuit with the excess power through the DC conversion circuit. How to charge the energy storage circuit through the DC conversion circuit will be described below in detail.

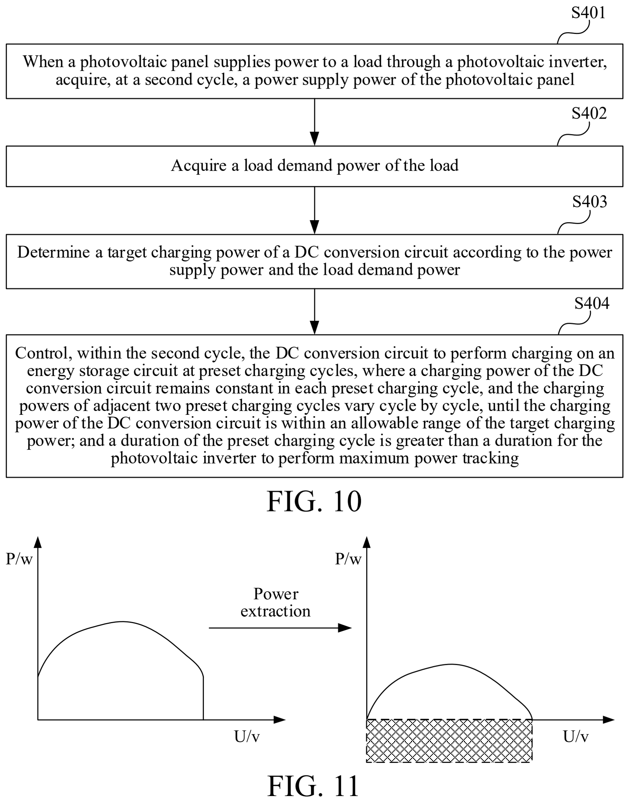

Please refer to FIG. 10. FIG. 10 is a schematic flowchart of another control method for a photovoltaic energy storage device according to an embodiment of this application, which may specifically include the following step S401 to step S404.

In step S401, when a photovoltaic panel supplies power to a load through a photovoltaic inverter, a power supply power of the photovoltaic panel is acquired at a second cycle.

It should be noted that when the photovoltaic inverter operates and the load consumes power, the photovoltaic panel may supply power to the load through the photovoltaic inverter. When the power supply power generated by the photovoltaic panel is excessive, the DC conversion circuit performs power extraction on the photovoltaic inverter, so as to store the excess power in the energy storage circuit. To avoid the situation that the DC conversion circuit affects the maximum power point tracking of the photovoltaic inverter during power extraction, it is necessary to control the DC conversion circuit to charge the energy storage circuit at a preset charging cycle, so that the charging power of the DC conversion circuit varies slowly. When the photovoltaic inverter does not operate or the load does not consume power, the photovoltaic panel may be charged directly through the DC conversion circuit without going through the photovoltaic inverter. In this case, the DC conversion circuit will not interfere with the photovoltaic inverter when the DC conversion circuit charges the energy storage circuit.

Exemplarily, when the photovoltaic panel supplies power to the load through the photovoltaic inverter, a power supply power of the photovoltaic panel is acquired at a second cycle. The second cycle may be set according to an actual situation, and its specific value is not limited here.

For example, the power supply voltage and power supply current of the photovoltaic panel may be acquired, and the power supply power of the photovoltaic panel is calculated according to the power supply voltage and power supply current of the photovoltaic panel. Of course, the power supply power of the photovoltaic panel may also be directly measured through a power measurement apparatus.

In step S402, a load demand power of the load is acquired.

Exemplarily, the load voltage and load current of the load may be acquired, and the load demand power of the load is calculated according to the load voltage and load current of the load.

In step S403, a target charging power of a DC conversion circuit is determined according to the power supply power and the load demand power.

Exemplarily, a power difference between the power supply power and the load demand power may be determined as the target charging power of the DC conversion circuit. For example, when the power supply power is 300 W and the load demand power is 200 W, the target charging power of the DC conversion circuit may be determined to be 100 W.

It should be noted that when the power supply power is less than the load demand power, the AC power grid needs to output a compensation power to the load. In this case, the DC conversion circuit needs to perform power compensation on the photovoltaic inverter to reduce the compensation power for AC power grid transmission to zero. For a specific power compensation process, a reference may be made to the detailed description of the above embodiments, which will not be repeated here.

In step S404, the DC conversion circuit is controlled within the second cycle to perform charging on an energy storage circuit at preset charging cycles, where a charging power of the DC conversion circuit remains constant in each preset charging cycle, and the charging powers of adjacent two preset charging cycles vary cycle by cycle, until the charging power of the DC conversion circuit is within an allowable range of the target charging power; and a duration of the preset charging cycle is greater than a duration for the photovoltaic inverter to perform maximum power tracking.

Exemplarily, after determining the target charging power of the DC conversion circuit, the DC conversion circuit may be controlled within the second cycle to perform charging on the energy storage circuit at preset charging cycles.

In some embodiments, a charging power of the DC conversion circuit in each preset charging cycle remains constant, and the charging powers of adjacent two preset charging cycles vary cycle by cycle, until the charging power of the DC conversion circuit is within an allowable range of the target charging power. The absolute value of the power variation between adjacent two preset charging cycles is a preset value. The preset value may be set according to an actual situation, and its specific value is not limited here.

Exemplarily, when the preset value is 10 W, if a charging power of the first preset charging cycle is 10 W, a charging power of the second preset charging cycle is 20 W, a charging power of the third preset charging cycle is 30 W, and so on, until the charging power of the DC conversion circuit is within an allowable range of the target charging power. For example, if the target charging power is 500 W, when the charging power of the DC conversion circuit is within the allowable range of the target charging power of 100 W, the charging power of the DC conversion circuit remains stable and no longer varies cycle by cycle. The allowable range may be set according to an actual situation, and its specific value is not limited here. For example, if the allowable range is (-5 W, 5 W), the charging power of the DC conversion circuit may be maintained between 95 W and 105 W.

Please refer to FIG. 11. FIG. 11 is a power-voltage curve diagram of another photovoltaic panel according to an embodiment of this application. As shown in FIG. 11, a shaded area represents an extracted power. When the charging power of the DC conversion circuit remains constant, it is equivalent to decreasing by a power value on the premise of the original power supply power of the photovoltaic panel. A PV curve of the photovoltaic panel shifts downwards relative to the original one, and a shape of the PV curve does not vary. Therefore, power extraction will not change the position of the maximum power tracking point, and will not affect the maximum power tracking of the photovoltaic inverter.

In the above embodiment, by setting the charging power of the DC conversion circuit to remain constant in each preset charging cycle and the charging powers of adjacent two preset charging cycles to vary cycle by cycle, the charging power of the DC conversion circuit can slowly vary relative to the maximum power tracked by the photovoltaic inverter, thus not affecting the maximum power tracking of the photovoltaic inverter, and improving the stability of the system.

In some embodiments, the duration of the preset charging cycle is greater than the duration for the photovoltaic inverter to perform maximum power tracking.

In this embodiment of this application, the duration of the preset charging cycle is greater than the duration for the photovoltaic inverter to perform maximum power tracking. For example, the duration of the preset charging cycle is M times the duration of maximum power tracking, where M is greater than or equal to 1.

It should be noted that by setting the duration of the preset charging cycle to be greater than the duration for the photovoltaic inverter to perform maximum power tracking, the charging power of the DC conversion circuit will not change the position of the maximum power tracking point, thus not affecting the maximum power tracking of the photovoltaic inverter, and improving the stability of the system.

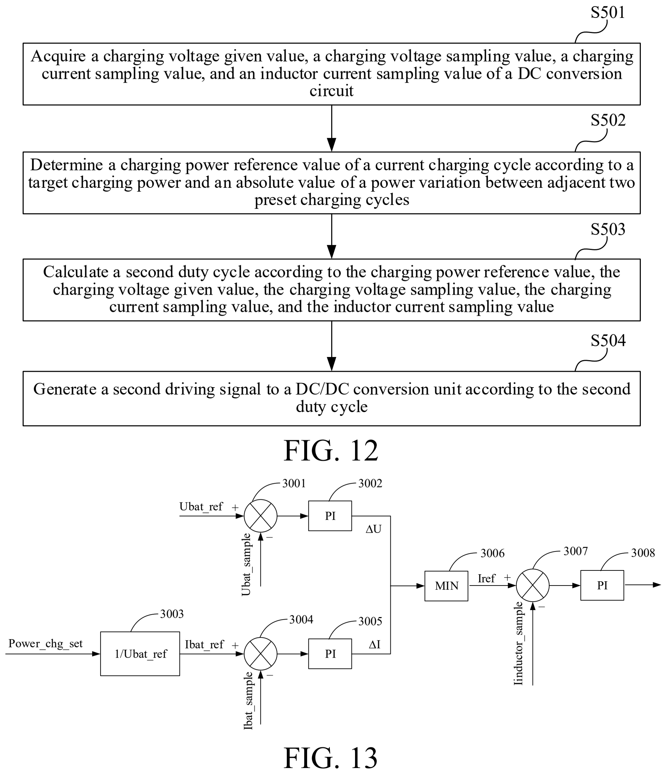

In this embodiment of this application, how to control the DC conversion circuit to perform charging on the energy storage circuit will be described in detail. Please refer to FIG. 12. FIG. 12 is a schematic flowchart of sub-steps of calculating a second duty cycle according to an embodiment of this application. Step S404, i.e., controlling the DC conversion circuit to perform charging on the energy storage circuit at a second cycle, may include the following step S501 to step S504.

In step S501, a charging voltage given value, a charging voltage sampling value, a charging current sampling value of the DC conversion circuit, and an inductor current sampling value of the DC conversion circuit are acquired.

Exemplarily, a charging voltage of the DC conversion circuit may be acquired through a voltage acquisition circuit to obtain the charging voltage sampling value of the DC conversion circuit; and a charging current of the DC conversion circuit may be acquired through a current acquisition circuit to obtain the charging current sampling value of the DC conversion circuit. Besides, current acquisition may be performed on the inductor unit of the DC conversion circuit through a current acquisition circuit to obtain the inductor current sampling value of the DC conversion circuit. The charging voltage given value of the DC conversion circuit may be preset. The charging voltage given value may be 1 V greater than the charging voltage sampling value.

In step S502, a charging power reference value of a current charging cycle is determined according to a target charging power and an absolute value of a power variation between adjacent two preset charging cycles.

Exemplarily, a charging power reference value of a previous charging cycle may be increased by the absolute value of the power variation to obtain the charging power reference value of the current charging cycle, until the charging power reference value of the current charging cycle is within an allowable range of the target charging power. For example, if the absolute value of the power variation is 10 W and the charging power reference value of the previous charging cycle is 10 W, then the charging power reference value of the current charging cycle may be determined to be 20 W.

In step S503, a second duty cycle is calculated according to the charging power reference value, the charging voltage given value, the charging voltage sampling value, the charging current sampling value, and the inductor current sampling value.

Exemplarily, after determining the charging power reference value of the current charging cycle, the charging power reference value, the charging voltage given value, the charging voltage sampling value, the charging current sampling value, and the inductor current sampling value may be inputted into a preset charging control loop to calculate the second duty cycle.

It should be noted that the preset charging control loop is configured to control the charging power of the DC conversion circuit. The charging control loop is configured to output a duty cycle to control the on/off of the switching transistor in the DC conversion circuit, so as to achieve the regulation of the charging power of the DC conversion circuit.

Please refer to FIG. 13. FIG. 13 is a schematic diagram of a charging control loop according to an embodiment of this application. As shown in FIG. 13, the charging control loop may include a fifth adder 3001, a fifth deviator 3002, a second divider 3003, a sixth adder 3004, a sixth deviator 3005, a comparator 3006, a seventh adder 3007, and a seventh deviator 3008. Power_chg_set represents the charging power reference value, Ubat-ref represents the charging voltage given value, Uout_stample represents the charging voltage sampling value, Iout_stample represents the charging current sampled value, and Iinduuctor_stample represents the inductor current sampling value. The comparator 3006 is configured to compare the magnitudes of two values and output the smaller value.

In some embodiments, calculating a second duty cycle according to the charging power reference value, the charging voltage given value, the charging voltage sampling value, the charging current sampling value, and the inductor current sampling value may include: based on the fifth adder and the sixth deviator, deviation regulation is performed according to a voltage difference between the charging voltage given value and the charging voltage sampling value to obtain a voltage deviation value; based on the second divider, calculating a charging current reference value of the DC conversion circuit according to the charging power reference value and the charging voltage given value; based on the sixth adder and the sixth deviator, deviation regulation is performed according to a current difference between the charging current reference value and the charging current sampling value to obtain a current deviation value; based on the comparator, determining a third inductor current reference value according to the smaller one of the voltage deviation value and the current deviation value; and based on the seventh adder and the seventh deviator, deviation regulation is performed on a current difference between the third inductor current reference value and the inductor current sampling value to obtain the second duty cycle.

Exemplarily, as shown in FIG. 13, the charging voltage given value Ubat_ref and the charging voltage sampling value Ubat_stample may be inputted into the fifth adder 3001 to perform subtraction, and the obtained voltage difference is inputted into the fifth deviator 3002 to perform deviation regulation to obtain the voltage deviation value ΔU; the charging power reference value Power_chg_set and the charging voltage given value Ubat_ref are inputted into the second divider 3003 to perform division to obtain the charging current reference value Ibat_ref of the DC conversion circuit; the charging current reference value Ibat_ref and the charging current sampling value Ibat_stample are inputted into the sixth adder 3004 to perform subtraction, and the obtained current difference is inputted into the sixth deviator 3005 to perform deviation regulation to obtain the current deviation value ΔI; the voltage deviation value ΔU and the current deviation value ΔI are inputted into the comparator 3006 to perform comparison, and an output value is determined as the third inductor current reference value Iref; and the third inductor current reference value Iref and the inductor current sampling value Iinduuctor_stample are inputted the seventh adder 3007 to perform subtraction, and the obtained current difference is inputted into the seventh deviator 3008 to perform deviation regulation to obtain the second duty cycle Compare_value.

In the above embodiment, the second duty cycle is obtained by inputting the charging power reference value, the charging voltage given value, the charging voltage sampling value, the charging current sampling value, and the inductor current sampling value into the charging control loop to perform calculation. This may quickly and accurately determine the second duty cycle.

In step S504, a second driving signal to a DC/DC conversion unit is generated according to the second duty cycle.

Exemplarily, after calculating the second duty cycle, a second driving signal to the DC/DC conversion unit may be generated according to the second duty cycle. The second driving signal may be a PWM signal.

For example, a PWM signal is generated according to the second duty cycle and outputted to the switching transistor in the DC/DC conversion unit, so that the switching transistor can be turned on or off according to the second duty cycle.

In the above embodiment, by outputting the second driving signal to the DC/DC conversion unit in the DC conversion circuit, the DC/DC conversion unit can operate according to the second driving signal and output a power that matches the charging power reference value.

An embodiment of this application further provides a computer-readable storage medium. The computer-readable storage medium stores a computer program. The computer program includes program instructions. A processor executes the above program instructions to implement the control method for any photovoltaic energy storage device provided in the embodiments of the present application.

The computer-readable storage medium may be an internal storage unit of the photovoltaic energy storage device in the foregoing embodiments, such as a hard disk or memory of the photovoltaic energy storage device. The computer-readable storage medium may also be an external storage device of the photovoltaic energy storage device, such as a plug-in hard disk, a smart media card (SMC), a secure digital (SD) card or a flash card equipped on the photovoltaic energy storage device.

Further, the computer-readable storage medium may mainly include a program storage area and a data storage area. The program storage area may store an operating system, a program required for at least one function, and the like. The data storage area may store data created according to each program, and the like.

## Claims

1. A control method for a photovoltaic energy storage device, wherein the photovoltaic energy storage device comprises an energy storage circuit and a DC conversion circuit; a first end of the DC conversion circuit is configured to be respectively connected to a photovoltaic panel and a photovoltaic inverter; a second end of the DC conversion circuit is connected to the energy storage circuit; the photovoltaic energy storage device is configured to output electric energy to the photovoltaic inverter, and supply power to a load connected to an AC bus after undergoing AC-DC conversion by the photovoltaic inverter; the AC bus is further connected to an AC power grid; and the method comprises:
when the photovoltaic panel supplies power to the load on the AC bus through the photovoltaic inverter, acquiring, at a first cycle, a first compensation power outputted from the AC power grid to the AC bus;
acquiring a second compensation power outputted from the DC conversion circuit to the photovoltaic inverter;
determining a target output power of the DC conversion circuit according to the first compensation power and the second compensation power; and
controlling, within the first cycle, the DC conversion circuit to perform power compensation on the photovoltaic inverter at preset compensation cycles, wherein an output power of the DC conversion circuit remains constant in each preset compensation cycle, and the output powers of adjacent two preset compensation cycles vary cycle by cycle, until the output power of the DC conversion circuit is within an allowable range of the target output power; and a duration of the preset compensation cycle is greater than a duration for the photovoltaic inverter to perform maximum power tracking.

2. The control method for a photovoltaic energy storage device according to claim 1, wherein the output powers of adjacent two preset compensation cycles varying cycle by cycle comprises:
when the target output power is greater than the second compensation power, the output powers of adjacent two preset compensation cycles increasing cycle by cycle; and
when the target output power is less than the second compensation power, the output powers of adjacent two preset compensation cycles decreasing cycle by cycle.

3. The control method for a photovoltaic energy storage device according to claim 2, wherein the DC conversion circuit comprises a DC/DC conversion unit; the DC/DC conversion unit comprises an inductor and at least one bridge arm unit; the bridge arm unit comprises two switching transistors connected in series; and the method further comprises, within each preset compensation cycle:
acquiring a discharging voltage sampling value, a discharging current sampling value, and an inductor current sampling value of the DC conversion circuit;
determining an output power reference value of a current compensation cycle according to the second compensation power and an absolute value of a power variation between adjacent two preset compensation cycles;
calculating a first duty cycle according to the output power reference value, the discharging voltage sampling value, the discharging current sampling value, and the inductor current sampling value; and
generating a first driving signal to the DC/DC conversion unit according to the first duty cycle.

4. The control method for a photovoltaic energy storage device according to claim 3, wherein the determining an output power reference value of a current compensation cycle according to the second compensation power and an absolute value of a power variation between the output powers of adjacent two preset compensation cycles comprises:
if the target output power is greater than the second compensation power, increasing an output power reference value of a previous compensation cycle by the absolute value of the power variation to obtain the output power reference value of the current compensation cycle; and
if the target output power is less than the second compensation power, decreasing the output power reference value of the previous compensation cycle by the absolute value of the power variation to obtain the output power reference value of the current compensation cycle.

5. The control method for a photovoltaic energy storage device according to claim 3, wherein the calculating a first duty cycle according to the output power reference value, the discharging voltage sampling value, the discharging current sampling value, and the inductor current sampling value comprises:
calculating an output power sampling value of the DC conversion circuit according to the discharging voltage sampling value and the discharging current sampling value;
performing deviation regulation according to a power difference between the output power reference value and the output power sampling value, and then performing amplitude limiting processing to obtain a first inductor current reference value; and
performing deviation regulation according to a current difference between the first inductor current reference value and the inductor current sampling value to obtain the first duty cycle.

6. The control method for a photovoltaic energy storage device according to claim 1, wherein the acquiring a second compensation power outputted from the DC conversion circuit to the photovoltaic inverter comprises:
determining the second compensation power according to an output current and output voltage of the DC conversion circuit.

7. The control method for a photovoltaic energy storage device according to claim 1, wherein the method further comprises:
when the photovoltaic panel supplies power to the load through the photovoltaic inverter, acquiring, at a second cycle, a power supply power of the photovoltaic panel;
acquiring a load demand power of the load;
determining a target charging power of the DC conversion circuit according to the power supply power and the load demand power; and
controlling, within the second cycle, the DC conversion circuit to perform charging on the energy storage circuit at preset charging cycles, wherein a charging power of the DC conversion circuit remains constant in each preset charging cycle, and the charging powers of adjacent two preset charging cycles vary cycle by cycle, until the charging power of the DC conversion circuit is within an allowable range of the target charging power; and a duration of the preset charging cycle is greater than a duration for the photovoltaic inverter to perform maximum power tracking.

8. The control method for a photovoltaic energy storage device according to claim 7, wherein the DC conversion circuit comprises a DC/DC conversion unit; the DC/DC conversion unit comprises an inductor and at least one bridge arm unit; and the controlling, within the second cycle, the DC conversion circuit to perform charging on the energy storage circuit at preset charging cycles comprises:
acquiring a charging voltage given value, a charging voltage sampling value, a charging current sampling value of the DC conversion circuit, and an inductor current sampling value of the DC conversion circuit;
determining a charging power reference value of a current charging cycle according to the target charging power and an absolute value of a power variation between adjacent two preset charging cycles;
calculating a second duty cycle according to the charging power reference value, the charging voltage given value, the charging voltage sampling value, the charging current sampling value, and the inductor current sampling value; and
generating a second driving signal to the DC/DC conversion unit according to the second duty cycle.

9. A photovoltaic energy storage system, comprising an energy storage circuit, a DC conversion circuit, and a controller, wherein the controller is configured to implement the control method for a photovoltaic energy storage device according to any one of claims 1 to 8.

10. A photovoltaic power supply system, comprising a photovoltaic panel, a photovoltaic inverter, and a photovoltaic energy storage device, wherein the photovoltaic energy storage device comprises an energy storage circuit, a DC conversion circuit, and a controller, the controller being configured to implement the control method for a photovoltaic energy storage device according to any one of claims 1 to 8.
